# FASCICULE DE BREVET EUROPEEN

(11) **EP 2 838 674 B1**
(45) Date de publication et mention de la délivrance du brevet: **16.01.2019**
(21) Numéro de dépôt: 13730099.2
(22) Date de dépôt: 15.04.2013
(51) Int. Cl.: B09B 1/00, E02B 3/12, E02D 17/20, E02D 31/02, B29C 65/02, B29C 65/48, B29L 16/00, B29C 65/10, B29C 65/20, B29C 65/00, B29C 65/04, B29L 7/00, B29C 65/08

(54) **STRUCTURE GEOSYNTHETIQUE MULTI-FONCTIONS**
MULTIFUNKTIONELLE GEOSYNTHETISCHE STRUKTUR
MULTIFUNCTIONAL GEOSYNTHETIC STRUCTURE

(30) Priorité: 16.04.2012 FR 1201119; 23.05.2012 FR 1201477
(43) Date de publication de la demande: 25.02.2015
(73) Titulaire: RYB Composites S.A.S., 45600 Sully sur Loire (FR)
(72) Inventeur: BLIN, Marc-Antoine, F-38140 Saint Blaise du Buis (FR)
(74) Mandataire: Schuffenecker, Thierry
(86) Numéro de dépôt international: PCT/EP2013/001099
(87) Numéro de publication internationale: WO 2013/156132

(56) Documents cités:
- EP-A2- 1 371 783
- DE-A1- 2 417 039
- DE-B3-102006 005 688
- DE-C1- 4 418 651
- DE-U1- 20 313 845
- JP-A- 3 033 312
- JP-A- 8 326 084
- US-A- 4 840 515
- US-B1- 7 014 390

## Description

### Domaine technique de l'invention

La présente invention concerne le domaine de la réalisation et la mise en oeuvre de produits géosynthétiques et notamment une structure géosynthétique multi-fonctions

### Etat de la technique

Depuis deux siècles le caractère industrieux et inventif de l'homme a contribué à produire quantité de nouveaux objets manufacturés à l'attention de nos sociétés contemporaines et à la consommation de masse. Pour autant il a conduit ces mêmes sociétés à générer quantités de déchets ménagers et industriels qui se reporteront sur les générations ultérieures qui auront à les gérer.

Ces mêmes déchets doivent pouvoir être stockés dans des conditions idoines, dans l'attente d'un traitement approprié.

Bien souvent, l'on se borne à un simple confinement des déchets permettant de les isoler de manière étanche des sols, et notamment des terres arables.

L'on utilise, à cette fin, des structures de confinement adaptées basées sur l'emploi de matériaux géosynthétiques combinant plusieurs éléments individuels, géomembrane, géoespaceurs, géotextiles etc...

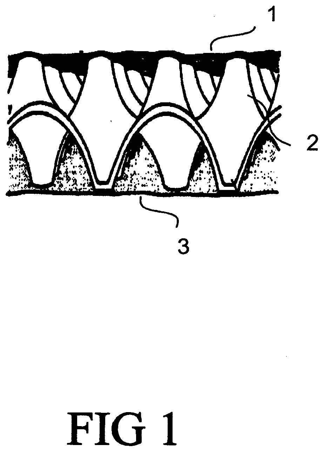

La figure 1 illustre ainsi une technique connue permettant de procéder au stockage et au confinement d'une masse de déchets, au moyen d'un géotextile 1 recouvrant une géoespaceur 2. Le géotextile 1 assure la séparation entre la terre de recouvrement et le géoespaceur tout en étant perméable aux eaux de pluie. Le géoespaceur, en recueillant les eaux de pluie, en assure le drainage pour leur permettre un écoulement vers le point bas.

Pour donner une certaine cohésion à l'ensemble des panneaux de géoespaceurs, ceux-ci sont disposés avec recouvrement latéral, de sorte que les structures à trois dimensions de deux panneaux adjacents se superposent pour assurer la cohésion de l'ensemble des deux panneaux.

Cependant les dimensions des panneaux étant de plusieurs mètres à plusieurs dizaines de mètres, la superposition des éléments tridimensionnels, en relief de l'ordre du centimètre, est difficilement assurée sur toute la longueur des panneaux. Il en résulte une perte d'étanchéité du géoespaceur au niveau des zones de recouvrement des panneaux qui nécessitent la mise en place d'une géomembrane 3 étanche sous le géoespaceur, au moment de la pose.

De cette manière, les eaux de pluie traversent le géotextile, et ruissellent le long du géoespaceur sans pour cela traverser la zone de déchets.

Comme on le voit, une telle structure, si elle est efficace, reste néanmoins complexe et coûteuse à mettre en oeuvre.

Il est souhaitable de pouvoir bénéficier d'une solution moins onéreuse et tout aussi efficace.

Tel est le but de la présente invention.

Le brevet JP 8 326084 décrit un procédé de jonction de panneaux basé sur une pluralité de demi bossages se projetant sur un côté d'un panneau de manière à réaliser une surface jointe.

Le brevet JP 3 033312 décrit la combinaison d'un corps de feuille plat et d'une section ondulée permettant la réalisation d'une feuille étanche.

### Exposé de l'invention

La présente invention a pour but de proposer une structure synthétique multi-fonctions assurant tout à la fois un confinement étanche d'une zone recouverte et le ruissellement des eaux de pluie.

Un autre but de la présente invention consiste à proposer une structure géosynthétique permettant le drainage des eaux de pluie et permettant également de s'affranchir de la pose d'une géomembrane.

C'est un autre but de la présente invention que de fournir une structure facile à fabriquer et peu coûteuse à mettre en place sur le lieu d'exploitation.

L'invention réalise ces buts au moyen d'une structure géosynthétique réalisée en matériau polymère à partir d'une feuille thermoformée selon la revendication 1.

Dans un mode de réalisation particulier, la structure est réalisée en Polyéthylène de Haute Densité (PEHD), en polypropylène (PP) ou autre thermoplastique.

De préférence, la seconde zone comporte en outre des bandes parallèles au sens traversant de manière à permettre le débitage de la structure en sous-éléments présentant chacun quatre bord plats.

Dans un mode de réalisation particulier, les motifs tridimensionnels sont des troncs pyramidaux.

Alternativement, ces motifs pourront présenter une forme demi sphérique ou en coquille d'oeuf.

L'invention permet également un procédé de réalisation d'une structure géosynthétique à partir d'un matériau polymère selon la revendication 6.

Dans un mode de réalisation, la structure est stockée sur un rouleau permettant de débiter des bandes de longueurs appropriées.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 est une illustration d'une structure composite géotextile conventionnelle.
La figure 2 est une vue en perspective d'un mode de réalisation d'une feuille géosynthétique stockée sur un rouleau.
La figure 3 est en vue de dessus de deux panneaux juxtaposés selon un mode de réalisation de l'invention.
La figure 4 est une vue de côtés des panneaux de la figure 1.
La figure 5 montre un autre mode de réalisation d'une feuille géosynthétique à base de motifs tronconiques pyramidaux.

### Description d'un mode de réalisation préféré

L'on décrit à présent la réalisation d'une structure géosynthétique multifonctions assurant tout à la fois des fonctions de séparation, de drainage, de protection et d'étanchéité, lesquelles sont traditionnellement assurées par la juxtaposition de plusieurs catégories distinctes de géosynthétiques, telles que les géomembranes et les géoespaceurs.

Les applications les plus directes de cette nouvelle structure géosynthétique concernent le confinement et le stockage de déchets. Pour autant, l'on pourra utiliser la nouvelle structure pour toute autre type d'applications, par exemple la séparation de sols présentant des caractéristiques distinctes, l'isolation de sols pollués etc...

Pour assurer la pluralité de fonctions dévolue à la nouvelle structure, l'on part d'une feuille de polymère, synthétique ou naturel, tel que par exemple du polyéthylène à haute densité (PEHD), du polypropylène (PP) ou autre thermoplastique, se présentant sur une grande longueur, par exemple et de manière non limitative, sur une longueur de 25 mètres minimum et une largeur variant de 1m10 à 4m30 environ.

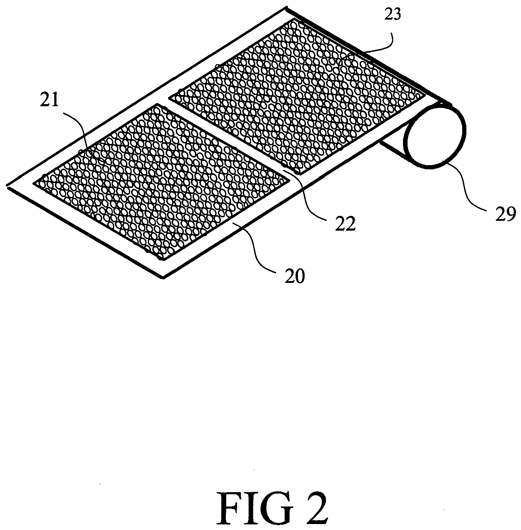

L'on procède ensuite à un thermoformage de cette feuille polymère de manière à faire apparaître au-moins deux zones 21 et 22 bien distinctes, illustrée dans la figure 2.

Une première zone 21 comporte une ensemble de motifs tridimensionnels, plus ou moins régulièrement répartis. Dans un mode de réalisation, les motifs font alternativement saillie, soit vers le haut de la feuille, soit vers le bas.

Une seconde zone 20 est exempte de tout motif tridimensionnel et comporte au moins deux bords plats, droite et gauche, suivant la longueur de la feuille, ie le sens de production de cette dernière.

Les bords plats de la seconde zone 20 sont conçus de manière à permettre une superposition de deux feuilles adjacentes et un assemblage par soudage ou collage suivant une ligne parallèle à la longueur.

Comme illustré dans la figure 2 montrant une feuille déroulée d'un rouleau de stockage 29, la seconde zone 20 comporte, outre les quatre bords de cette même feuille, une série de bandes plates suivant le sens travers, perpendiculaire à la longueur ou au sens de production.

De cette manière, la structure géosynthétique fait apparaître, sur sa surface, une juxtaposition de zones de motifs tridimensionnels 21 , 23 ...., séparée chacune par une bande 22.

L'on obtient ainsi, sur toute la surface de la feuille, nappe, ou bande une juxtaposition de surfaces carrées ou rectangulaires faisant apparaître les motifs tridimensionnels.

L'on pourrait ainsi venir débiter une longueur souhaitée de nappe/bande, tout en conservant un bord plat sur chacun des quatre côtés de la surface débitée.

Grâce à l'apport de ces bords plats, la mise en place de la nouvelle structure géosynthétique sur le lieu d'exploitation est significativement plus simple.

En premier lieu, il devient possible de débiter des sous-ensembles du rouleau, par exemple n x 4 mètres, de manière à obtenir un lé présentant une longueur adéquate.

En second lieu, il est possible de venir juxtaposer aisément deux lés et de procéder à leur assemblage de manière à réaliser une couverture parfaitement étanche que l'on pourra déposer sur un fond de forme quelconque.

L'assemblage des lés pourra être réalisé de diverses façons, de manière à assurer un recouvrement étanche et durable.

L'on pourra envisager en premier lieu un assemblage par soudure thermique, avec ou sans apport de matière, voire même par double soudure consistant à la réalisation simultanée de deux joints parallèles. Clairement, la soudure thermique ne fait pas partie de la présente invention et il n'est nullement nécessaire de développer plus avant le mode opératoire à considérer, lequel pourra varier en fonction des besoins particuliers de la mise en situation. Il suffit de rappeler que, d'une manière générale, la soudure thermique visent à assembler avec pression deux surfaces qui sont ramollies par une chaleur suffisante pour provoquer une fusion partielle des matériaux à souder. Comme cela est connu d'un homme du métier, cette chaleur peut être générée au moyen d'une lame métallique, peut être apportée par un jet d'air, ou encore par des ultrasons et/ou un champ électrique à haute fréquence.

De préférence, la soudure thermique pourra être réalisée au moyen d'un dispositif automatique permettant de régler automatiquement les paramètres conditionnant la soudure: pression, température, vitesse...

L'on pourra envisager en second lieu un soudage par solvant, voir par collage ou vulcanisation, avec ou sans apport de matière.

Dans tous les cas, qu'il s'agisse de soudure ou de collage, les bords plats que présentent la structure géosynthétique proposée permet la mise en oeuvre de l'assemblage de lés juxtaposés de manière à forme une enveloppe parfaitement **étanche.**

Au delà de cette étanchéité qui est traditionnellement permise par les géomembranes, la nouvelle structure permet en outre effets techniques de **séparation,** de **drainage** et de **protection.**

Ces fonctionnalités supplémentaires résultent des zones 21, 22 ... comportant les motifs tridimensionnels permettant de réaliser un fort indice de vide, facilitant l'écoulement de l'eau.

Les motifs tridimensionnels pourront être d'ailleurs divers et de formes variées.

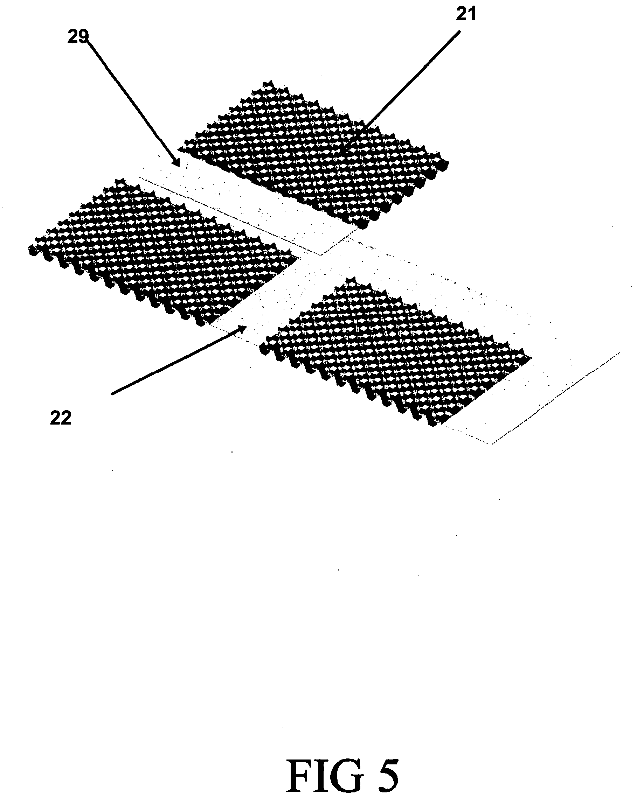

Suivant un premier mode de réalisation, l'on pourra envisager des troncs pyramidaux, comme cela est illustré dans la figure 5.

Alternativement, l'on pourra prendre une forme de coquille d'oeufs, de demi-sphère ou toute forme quelconque.

La nouvelle structure qui est proposée se distingue par conséquent de la géomembrane traditionnellement vue comme un produit *mince* (Cf la définition prévue au point 3.1. de la norme française NF P84-500 de Juin 1998), par sa structure tridimensionnelle des zones 21, 22 .... apportant tout à la fois la séparation de couches de matériaux, le drainage, la protection contre le glissement de pente des couches de drainage.

Mais la nouvelle structure se distingue tout autant d'un géotextile classique et d'un géoespaceur conventionnel en raison de l'étanchéité permise par la juxtaposition des feuilles et le soudage/collage des bords de recouvrement de la zone 20, de manière à constituer, en une seule opération, une enveloppe complètement étanche confinant parfaitement les sols sur lesquels reposent l'enveloppe.

Il s'agit ici d'une déviation particulièrement significative dans la manière classique de réaliser les géotextiles et les géomembranes. L'ouvrage « Geotextiles » de Nigel W. M. John, Blackie and Son Ltd, 1985 , souligne ainsi la « séparation » fondamentale que l'homme du métier accorde traditionnellement entre la géomembrane et le géotextile :
« *As this collection of rather similar sounding names can sometimes be rather confusing, the author generally prefers to use the term geotextile to refer to all geotextile related products excluding conventional geomembranees. Geotextiles are used in a wide range of applications, which continues to grow as new forms of geotextiles are developed. The main applications are erosion control, soil filtration, road sub-base separators, reinforcing soils in embankments and retaining walls* , *and the protection of geomembranes* **(souligné par nous)".** Page 2

La présente invention conduit à aller de la conception classique, et d'envisager une nouvelle et unique structure pour remplir ces fonctions attribuées classiquement, et de manière indépendante, aux geoespaceurs et aux géomembranes.

En outre, allant au-delà de la simple juxtaposition des effets techniques produits séparément par la géomembrane et le géoespaceur, pris indépendamment, la présente invention permet en outre un gain de temps significatif puisqu'il sera possible, en une seule opération, de juxtaposer les layes et de procéder à leur soudage.

D'une manière particulièrement avantageuse, la nouvelle structure pourra ensuite être recouverte d'un géotextile permettant une filtration efficace .

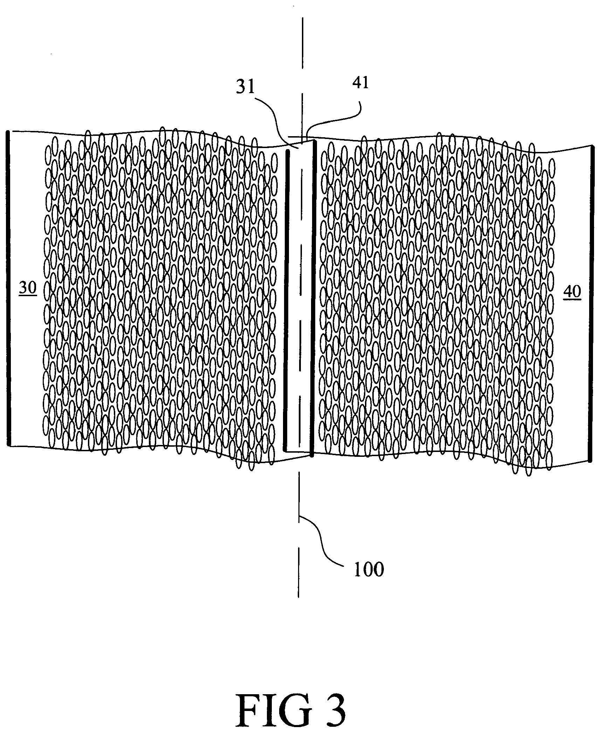

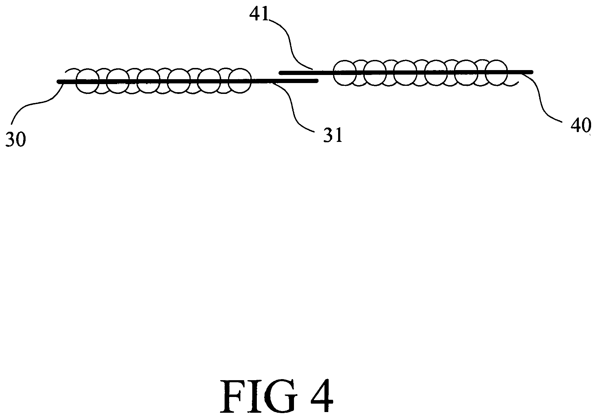

Les figures 3 et 4 illustrent plus particulièrement le détail de l'assemblage de deux lés ou panneaux 30 et 40, respectivement, comportant chacun un bord plat 31 et 41 respectivement. Comme on le voit plus particulièrement dans la figure 4, les deux feuilles thermoformées 30 et 40 comportent des demi-sphères régulièrement réparties, et faisant saillie alternativement vers le haut et vers le bas. Chaque feuille 30, 40 est bordée par un bord plat, respectivement 31 et 41. Les bords plats de deux feuilles adjacentes 30 et 40 sont superposés et assemblés par soudage et collage selon une ligne 100. Ainsi deux panneaux adjacents 1,2 sont liés entre eux par une ligne de fixation efficace et assurant une étanchéité. Cette liaison étanche entre panneaux adjacents est particulièrement appréciable dans les applications de geoespaceurs au stockage en décharge et confinement des déchets, là ou classiquement il conviendrait de prévoir un polyane étanche.

Plus généralement, la structure pourra être utilisée dans la plupart des ouvrages de génie civil et de protection de l'environnement, pour les infrastructures de transports, ouvrages hydrauliques, bassins de rétention d'effluents, installations de stockage de déchets, dispositifs de protection contre l'érosion, etc...

## Revendications

1. Structure géosynthétique réalisée en matériau polymère à partir d'une feuille thermoformée comportant:
- au moins une première zone (21,) dotée de motifs tridimensionnels susceptibles de permettre le drainage des eaux de pluies;
**Caractérisée en ce qu'**elle comporte en outre :
- une seconde zone (20, 22) exempte de motifs tridimensionnels, comportant au moins deux bords plats parallèles au sens de production de ladite feuille thermoformée ainsi que des bandes plates suivant le sens travers, perpendiculaire au sens de production, ladite seconde zone présentant un motif de surface permettant un assemblage par soudure/collage desdits bords plats de deux lés juxtaposées.

2. Structure géosynthétique selon la revendication 1 **caractérisée en ce qu'**elle est réalisée en Polyéthylène de Haute Densité (PEHD) en polypropylène (PP) ou autre thermoplastique.

3. Structure géosynthétique selon la revendication 1 ou 2 **caractérisée** en ce ladite seconde zone (20) comporte en outre des bandes parallèles au sens traversant de manière à permettre le débitage de la structure en sous-éléments présentant chacun quatre bord plats.

4. Structure géosynthétique selon l'une quelconque des revendications précédentes **caractérisée en ce que** lesdits motifs tridimensionnels sont des troncs pyramidaux.

5. Structure géosynthétique selon l'une quelconque des revendications 1 à 3 **caractérisée en ce que** lesdits motifs tridimensionnels présentent une forme demi sphérique ou en coquille d'oeuf.

6. Procédé de réalisation d'une structure géosynthétique à partir d'un matériau polymère telle que définie dans la revendication 1, comportant les étapes suivantes:
- disposition de lés de feuilles thermoformées, comportant chacune une longueur et une largeur et ayant sur sa surface des motifs tridimensionnels bordés par un bord plat parallèle au sens de la longueur, et présentant un motif de surface permettant un assemblage par soudure/collage de deux lés juxtaposés ;
- juxtaposition de deux lés et assemblage par soudage collage de leurs bords plats.

## Patentansprüche

1. Geosynthetische Struktur aus einem Polymermaterial aus einer thermogeformten Folie, umfassend:
mindestens eine erste Zone (21) mit dreidimensionalen Mustern, die eine Regenwasserableitung ermöglichen können;
eine zweite Zone (20, 22), die frei von dreidimensionalen Mustern ist, umfassend mindestens zwei flache Ränder parallel zur Produktionsrichtung der thermogeformten Folie sowie flache Streifen entlang der Querrichtung, senkrecht zu der Produktionsrichtung, wobei die zweite Zone ein Oberflächenmuster aufweist, das eine Verbindungdurch Schweißen/Kleben der flachen Streifen von zwei aneinandergelegten Streifen ermöglicht.

2. Geosynthetische Struktur nach Anspruch 1, **dadurch gekennzeichnet, dass** diese aus hochdichtem Polyethylen (HDPE), aus Polypropylen oder einem anderen Thermoplast hergestellt ist.

3. Geosynthetische Struktur nach Anspruch 1 oder 2, **dadurch gekennzeichnet, dass** die zweite Zone (20) weiterhin Streifen parallel zueinander und in Querrichtung verlaufen umfasst, so dass die Struktur in Unterelemente mit jeweils vier flachen Rändern geschnitten werden kann.

4. Geosynthetische Struktur nach einem der vorhergehenden Ansprüche, **dadurch gekennzeichnet, dass** die dreidimensionalen Muster pyramidenförmige Stümpfe sind.

5. Geosynthetische Struktur nach einem der vorhergehenden Ansprüche, **dadurch gekennzeichnet, dass** die dreidimensionalen Muster eine halbkreisförmige Form oder eine ovale Form aufweisen.

6. Verfahren zur Herstellung einer geosynthetischen Struktur aus einem Polymermaterial nach Anspruch 1, umfassend die folgenden Schritte:
Anordnen von thermogeformten Folien, die jeweils eine Länge und eine Breite haben und auf ihrer Oberfläche dreidimensionale Muster aufweisen, die von einem flachen Rand parallel zu der Längsrichtung begrenzt sind und die ein Oberflächenmuster aufweisen, das eine Verbindungdurch Schweißen/Kleben von zwei aneinandergelegten Platten ermöglicht;
Aneinanderlegen von zwei flachen Streifen und Verbinden durch Klebeschweißen ihrer flachen Streifen.

## Claims

1. Geosynthetic structure made of polymeric material from a thermoformed sheet comprising:
- at least a first zone (21) provided with three-dimensional patterns capable of permitting drainage of rainwater;
**Characterized in that** it further comprises:
- a second zone (20, 22) excluding any three-dimensional patterns, comprising at least two parallel flat edges in the direction of production of said thermoformed sheet, as well as parallel strips in the traversing direction, said second zone presenting a surface patter allowing the assembly by welding/bonding of two juxtaposed strips.

2. The geosynthetic structure according to Claim 1, **characterized in that** it is made of High Density Polyethylene (HDPE) or polypropylene or any other thermoplastic.

3. The geosynthetic structure according to claim 1 or 2 **characterized in that** said second zone (20) further comprises parallel strips in the traversing direction so as to allow the cutting of the structure in sub-elements each having four flat edges.

4. The geosynthetic structure according to any one of the preceding claims **characterized in that** said three-dimensional patterns are pyramidal trunks.

5. The geosynthetic structure according to any one of claims 1 to 3 **characterized in that** said three-dimensional patterns have a half-spherical shape or eggshell.

6. A process for producing a geosynthetic structure from a polymeric material, comprising the following steps:
- arranging thermoformed sheets, each having a length and a width and having on its surface three-dimensional patterns bordered by a flat edge parallel in the direction of the length;
- juxtaposition of two sheets and assembly by welding or gluing their flat edges.
